# EUROPEAN PATENT SPECIFICATION

(11) **EP 2 117 979 B1**
(45) Date of publication and mention of the grant of the patent: **10.11.2010**
(21) Application number: 07726935.5
(22) Date of filing: 15.03.2007
(51) Int. Cl.: B65G 61/00, B25J 9/16

(54) **A METHOD AND A SYSTEM FOR CONTROLLING AN AUTOMATIC FLOW OF PRODUCTS**
VERFAHREN UND SYSTEM ZUR STEUERUNG EINES AUTOMATISCHEN PRODUKTSTROMS
PROCÉDÉ ET SYSTÈME POUR COMMANDER UN FLUX AUTOMATIQUE DE PRODUITS

(43) Date of publication of application: 18.11.2009
(73) Proprietor: ABB Technology AB, 721 83 Västerås (SE)
(72) Inventor: KNOBEL, Henrik, 187 32 Täby (SE); WARVELIN, Mats E., 741 91 Knivsta (SE)
(74) Representative: Reyier, Ann-Mari
(86) International application number: PCT/EP2007/052445
(87) International publication number: WO 2008/110213

(56) References cited:
- US-A- 5 281 081
- US-B1- 6 290 448

## Description

### FIELD OF THE INVENTION

The present invention relates to a method for controlling an automatic flow of products, wherein a programmable mechanical device moves the products between a plurality of transport stations, which supplies or consumes the products, and at least one aggregation station on which an aggregation of products is built up or dismounted according to a pattern.

The invention also relates to a system for controlling an automatic flow of products between a plurality of transportation stations and at least one aggregation station.

### PRIOR ART

Automation of placing of products, for example boxes containing food or other type of goods on a pallet by using a robot, is well known. One or more transport stations, for example conveyors, supply the products to the robot, i.e. transport the products to a position in the working range of the robot. The robot then picks the product on the transport station, moves the product to an aggregation station, such as a palletizing station, and places the products on the aggregation station. The products are placed on the aggregation station in a certain pattern, which often is pre-determined to be optimal with regard to the available space. It is also known to use a robot to dismount a stack of products on an aggregation station. The robot then picks the products on the stack, moves the products to one of the transportation stations, and places the products on the transport station, which consumes the products, i.e. transports the products away from the robot.

A robot controller controls the robot in accordance with a robot program including move, pick and place instructions. Conventionally, the automation of the flow of products is carried out by means of a robot program, which controls the movement of the robot between the transport stations and an aggregation station, such as a palletizing station, on which the robot places or picks the products. The transport stations are, for example, controlled by a common computer unit, such as a programmable logic computer (PLC). The transport stations are controlled in accordance with a PLC program. The flow of products between the stations is determined beforehand, and the programming is made based on the determined flow of products. A problem with this method is that it is inflexible. If the flow changes, for example if the products supplied by one transport station are changed, the robot program and the PLC program have to be amended, which is troublesome and time-consuming. The inflexible pre-determined assignment of products to certain stations makes it impossible or complex to adapt the palletizing to different production conditions, to move the production of a certain aggregation, such as a pallet load, to another station, or to ramp up or down the production by deciding how many aggregation stations should be used concurrently. In a system, where a specific transportation station can only carry a certain product of a certain format, it is not possible to run a certain product at all if that very same transportation station is out of order. This may block the entire flow of products.

Accordingly, there is a need for a more flexible way of controlling the robot and the transportation stations.

### OBJECTS AND SUMMARY OF THE INVENTION

The object of the present invention is to provide a more flexible way of automatically controlling a flow of products.

According to one aspect of the invention, this object is achieved with a method as defined by claim 1.

Such a method comprises: receiving at least one sequence of operations defining at least a part of a desired flow of products to or from the aggregation station in order to build up or dismount said aggregation of products according to the pattern, loading the received sequence of operations to a queue for the aggregation station, and repeating the following steps until all operations in the queue has been executed: retrieve next operation from the queue of the aggregation station, select one of the transport stations and control it based on the retrieved operation, and instruct the mechanical unit to perform movements for transporting a product between the selected transport station and the aggregation station based on the retrieved operation.

A method is proposed which automates the logical control of the flow of products between a plurality of transport stations and at least one aggregation station, wherein a programmable mechanical device moves the products between the transport stations and the aggregation station.

A programmable mechanical device can be any type of programmable device, which is able to move a product between a plurality of transport stations and an aggregation station, for example an industrial robot. In the present application the term aggregation station refers to a physical place, for example a palletizing station, where an aggregation of products is built up or dismounted. The aggregation station and transport stations are positioned within the working range of the mechanical unit.

The method can be used for controlling a flow of products from the transportation stations to the aggregation station, during which an aggregation of products is built up on the aggregation station, as well as for controlling a flow of products from the aggregation station to the transport stations, during which an aggregation of products positioned on the aggregation station is dismounted. The pattern is determined by the positions of the products in the aggregation.

The sequence of operations defines the flow of products to or from the aggregation station. More particularly the sequence of operations defines a sequence for picking and placing of determined products on the aggregation station. The sequence of operations can be calculated and stored in advance. Each operation defines whether the product is to be moved to or from the aggregation station, i.e. if the product is to be placed on or picked from the aggregation station, and which product to be moved. The sequence of operations is focused on the flow of products to or from the aggregation station, and does not contain any information on from or to which transport station the product is to be moved. According to the invention, the aggregation station acts as a master station and the transport stations act as slave stations. The sequence of operations is loaded into a queue for the aggregation station. The operations are retrieved, one at a time, from the queue of the aggregation station. The retrieved operation contains information on which product to be handled in the present operation, and based on this information one of the transport stations, which is able to provide this product, is selected. The selected transport station is controlled in order to supply or consume the product based on what is requested in the retrieved operation. Further, the mechanical unit is instructed to perform a movement that transports the requested product between the selected transport station and the aggregation station, i.e. from the transport station to the aggregation station, or from the aggregation station to the transport station.

It is not necessary to load the whole sequence of operations defining the entire build-up or dismounts of the aggregation to the queue at the same time. It is also possible to load only a part of the sequence of operations, or only one operation at a time, and to execute the loaded operation(s) before the next part of the operation or the next operation is loaded to the queue.

The invention defines a generic logical concept for controlling the order of products being moved from one station to another. The flow of products defines the order of the products being moved between the stations. By executing the access order of the aggregation station, which acts as a master station, the logical dependencies of the requests to the transport stations, which act as slave stations, are automatically controlled. The number of products requested, the type of the products, and the order of the products requested by the master station define the logics of the control. The logical sequence also defines which slave station to select based on a known assignment of a specific set of products to a specific transport station. Several transport stations may produce the same set of products. In this case a priority concept may define the order of the transport stations.

The method according to the present invention is flexible and no reprogramming is necessary if any of the transport stations will deliver another type of products, other format of the products, or if the number of transportation stations is increased or decreased. To or from which transport station a product is to be moved in a certain operation is decided during execution of the program, and is not decided beforehand. This makes the method according to the invention very flexible.

A typical use of the present invention is in packaging applications and handling applications, where products are moved from stations feeding products of certain formats to other stations where new aggregations of the products are created.

According to an embodiment of the invention, the sequence of operations comprises information on a desired format of the product and one of the transport stations is selected and controlled based on the desired format of the product, and information on which product format or formats each transport station can supply or consume. For example, the format defines the type of product, the number of products to be handled at the same time, and the configuration relative each other of the products to be handled at the same time. It is possible that a transport station supplies products of a plurality of different formats. Information on which format or formats each transport stations can supply must be known. A transport station, which is able to supply the requested product format, is selected during execution of the operations of the sequence. Thus, it is not necessary to know which product format, or formats, the transport stations will deliver when creating the control programs for the mechanical unit and the transport stations. This embodiment makes it possible to automatically control a flow of products from transportation stations that deliver products of different formats, e.g. if the production of a certain product has to be doubled instantly, the same product can be produced on a second aggregation station, yet still sharing the very same transportation stations simultaneously with the first aggregation station. If a transportation station cannot operate, the products can be diverted to another transportation station and the production can continue without interruption, as the alternative transportation station will be selected instead.

It is not necessary to directly control the transport stations based on the operation. For example, if the transportation stations are controlled by an external control device, a request to feed a product of a certain format can be sent to the external device, which selects a transportation station which is able to supply a product of the requested format, and the external device then controls the selected transportation station so that it supplies a product of the requested format.

According to an embodiment of the invention, the sequence of operations includes information on parameter values for the movements of the mechanical unit, and the movements of the mechanical unit are instructed based on the parameter values. Preferably, the parameter values comprise a list of targets defining a movement path for the mechanical unit, the list including positions of the targets. Further, the parameter values may comprise speed data and acceleration data for the targets, and events to be carried out along the movement path, such as opening or closing of a gripper held by a robot. Further, the parameter values may comprise parameters for controlling activation of zones in a gripper tool in a correct sequence and in a correct position on the robot movement path.

The sequence of operations also includes information on the types of the movements to be carried out by the mechanical unit, wherein one type of movement is a pick operation and another type of movement is a place operation. Thus, the sequence of operations specifies how the movements of the mechanical unit are to be carried out in connection with the aggregation station. For example, the operation defines that a product is to be placed on the aggregation station, specifies the position at which the product is to be placed, and how the movement is to be carried out. Thereby, the sequence of operations does not need to include any program instructions to the mechanical unit only the parameters defining the movement. A robot control program, running in parallel with the program controlling the flow of products, may receive the parameters, and control the movements of the mechanical unit based on the parameters. Thereby, the programming of the mechanical unit is facilitated and becomes very flexible. The same control program can be used for carrying out a plurality of different sequences of movements. The control program does not have to be altered to handle different products and even new products. It runs the same instruction, constantly requesting new information data. In this way the control program is reduced to a minimum, which in turn make it simple to maintain, to debug and to reuse.

According to an embodiment of the invention, the method further comprises: storing at least one predefined movement operation for each transport station defining a pick or place movement for the mechanical unit in relation to the transport station, retrieving a predefined movement operation for the selected transport station, and instructing the mechanical unit to perform the movements for transporting the product between the selected transport station and the aggregation station based on the retrieved movement operation for the selected transport station. When a transport station has been selected, a movement operation including information on how the movements of the mechanical unit are to be carried out in relation to the transport station is retrieved. At least one predefined movement operation is stored beforehand for each of the transport stations. When one of the transport stations is selected, a movement operation for the selected station is retrieved, and the mechanical unit is instructed to perform the movements based on the retrieved movement operation. Accordingly, the movement of the mechanical unit depends on which transport station is selected. This embodiment further increases the flexibility of the present invention.

According to an embodiment of the invention, a plurality of predefined movement instructions defining pick or place movements for different product formats is stored for at least one of the transport stations, and the method comprises retrieving a predefined movement operation for the selected transport station based on the information on a desired format of the product to be moved. This embodiment makes it possible to define a plurality of different movement operations for each transport station, defining movements to be carried out by the mechanical unit in order to pick or place products of different formats on the transport station. If the transport station is able to deliver more than one product format, different movement operations can be pre-defined for the different formats. The movements to be carried out by the mechanical unit when picking or placing the product depend on the format of the product. This embodiment makes it possible to have a transport station that feeds a plurality of different product formats, and still automatically control the flow of products between the transportation station and the aggregation station.

According to an embodiment of the invention, the method comprises storing a plurality of sequences of operations defining different flows of products to or from the aggregation station, selecting one of the stored sequences of operation, and loading the selected sequence of operations to the queue for the aggregation station. This embodiment makes it possible to define a plurality of different sequences of operations for the aggregation station and to select one of the sequences in dependence on a desired flow of products. For example, one of the sequences of operations may define a flow of products that builds up an aggregation of a particular type of products, and other sequences may define flows of products that build up aggregations of other types of products, for example with different shapes and thereby needing a different flow of products. The aggregation is, for example, a pallet filled with manufactured products.

According to an embodiment of the invention, the programmable mechanical device moves the products between a plurality of transport stations and a plurality of aggregation stations, and the method comprises: receiving for each aggregation station at least one sequence of operations defining a desired flow of products to or from the aggregation station, loading for each aggregation station the received sequence of operations to a queue for the aggregation station, and repeating for each queue the following steps until all operations in the queue has been executed: retrieve next operation from the queue of the aggregation station, select one of the transport stations and control it based on the retrieved operation, and instruct the mechanical unit to perform movements for transporting a product between the selected transport station and the aggregation station based on the retrieved operation. According to this embodiment, a plurality of flows between a plurality of transport stations and a plurality of aggregation stations is defined by a plurality of sequences of operations. Each aggregation station is provided with a queue, and the sequences of operations are loaded into the queues of the aggregation stations. Thus, this embodiment allows a plurality of product flows to different aggregation stations to be controlled in parallel. For example, the execution order of the queues is determined based on defined priorities for the aggregation stations.

It is easy to realize that the method according to the invention, as defined in the appended set of method claims, is suitable for execution by a computer program, or a plurality of computer programs executed in parallel, having instructions corresponding to the steps in the inventive method when run on one or more processor units.

According to a further aspect of the invention, the object is achieved by a computer program product directly loadable into the internal memory of a computer or a processor, comprising software code portions for performing the steps of the method according to the appended set of method claims, when the program is run on a computer. The computer program is provided either on a computer readable medium, or through a network.

According to another aspect of the invention, the object is achieved by a computer readable medium having a program recorded thereon, when the program is to make a computer perform the steps of the method according to the appended set of method claims, when the program is run on the computer.

According to another aspect of the invention, the object is achieved by a system as defined in claim 16.

Such a system comprises: a plurality of transport stations which supplies or consumes the products, at least one aggregation station on which an aggregation of products is built up or dismounted according to a pattern, a programmable mechanical device adapted to move the products between the transport stations and the aggregation station, a queue for the aggregation station, and a computing device having therein program code usable by said computing device, said program code comprising code configured to: receive at least one sequence of operations defining at least a part of a desired flow of products to or from the aggregation station in order to build up or dismount said aggregation of products according to the pattern, load the received sequence of operations to the queue of the aggregation station, and repeating the following steps until all operations in the queue has been executed: retrieving next operation from the queue of the aggregation station, selecting one of the transport stations and control it based on the retrieved operation, and instructing the mechanical unit to perform movements for transporting a product between the selected transport station and the aggregation station based on the retrieved operation.

According to an embodiment of the invention, the mechanical unit is an industrial robot and the computing device is a robot controller.

### BRIEF DESCRIPTION OF THE DRAWINGS

The invention will now be explained more closely by the description of different embodiments of the invention and with reference to the appended figures.
Figure 1 shows a system for controlling an automatic flow of products according to an embodiment of the invention.
Figure 2 shows an aggregation of products in a perspective view.
Figure 3 shows a block diagram over a system for controlling an automatic flow of products according to an embodiment of the invention.
Figure 4 shows a flow diagram of an example of a robot program for moving products between a plurality of transport stations and an aggregation station.
Figure 5 shows a flow diagram of a program for controlling an automatic flow of products according to an embodiment of the invention, which is cooperating with the robot program shown in figure 4.
Figure 6 shows a flow diagram of an example of a program controlling an external logic unit, which controls a plurality of transport stations in cooperation with the program shown in figure 7.
Figure 7 shows a flow diagram for a program controlling a plurality of parallel flows of products in cooperation with the programs shown in figure 4 and 5.

### DETAILED DESCRIPTION OF PREFERRED EMBODIMENTS OF THE INVENTION

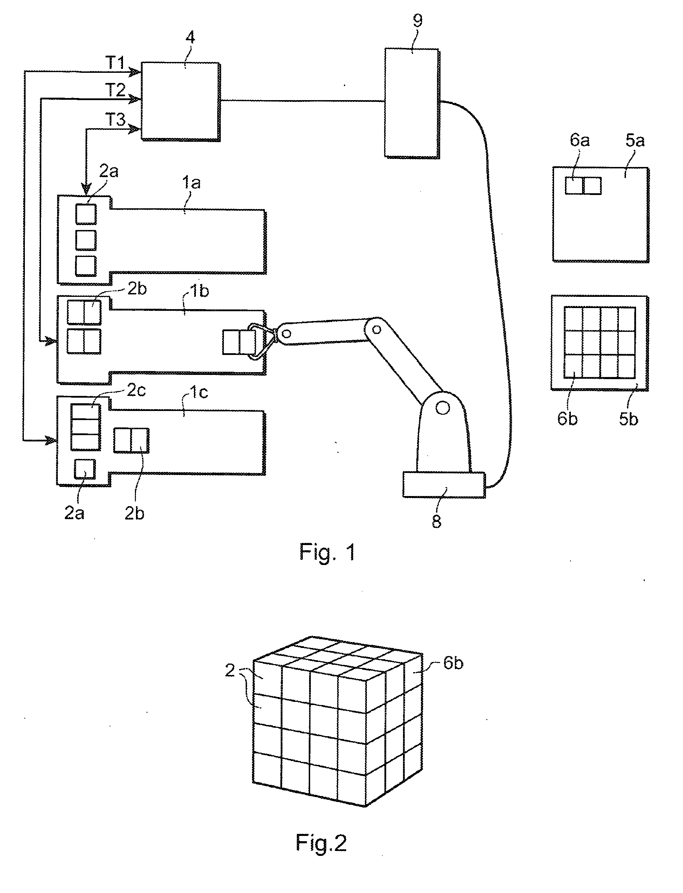

Figure 1 shows an example of a system for controlling an automatic flow of products according to an embodiment of the invention. The system comprises a plurality of transport stations 1a-c which supply or consume products 2a-c of different formats. A transport station may supply or consume more than one format. In this example, transport station 1a supplies products 2a of a first format, transport station 1b supplies products 2b of a second format, and transport station 1c supplies products 2a-c of three different formats. In this example an external logic unit 4, for example a PLC, controls the transport stations. The external logic unit 4 receives output signals from the transport stations and sends input signals to the transport stations for controlling their movements and for controlling which format they supply. However, it is not necessary to have any external logic unit for controlling the transport stations. For example, it is possible to send an order to an information device for an operator, e.g. a handheld information device (PDA), or a text message on a cell phone, or an information string on a display monitor, and the operator fetches products of the requested format and places them in a correct position on the transport station.

The transportation stations are in this embodiment three conveyor stations. The system further comprises two aggregation stations 5a and 5b on which aggregations of products, such as pallet load, are built up or dismounted according to a pattern. In the figure, an aggregation 6a has just started to be built up on aggregation station 5a, and accordingly only two products has yet been placed on the aggregation station. An aggregation 6b has been built up on the aggregation station 5b. Figure 2 shows a completed aggregation 6b of products 2. As can be seen from the figure, the products 2 are positioned according to a certain pattern.

The system further comprises a programmable mechanical device 8, in this case an industrial robot, adapted to move the products between the transportation stations 1a-c and the aggregation stations 5a-b. The robot 8 is provided with a robot controller 9 including data storage and processor capacity for controlling the movements of the robot. According to this embodiment of the invention, the robot controller 9 also includes data storage and processor capacity for automatically controlling the flow of products between the stations. The robot controller 9 includes a queue for each of the aggregation station 5a-b and a queue for each of the transportation stations 1a-c. The robot controller 9 is provided with program code configured to automatically control the flow of products between the transportation stations and the aggregation stations and to control the movement of the industrial robot in order to carry out the automatic flow of products. The external logic unit 4 communicates with the robot controller 9 either directly or through a network.

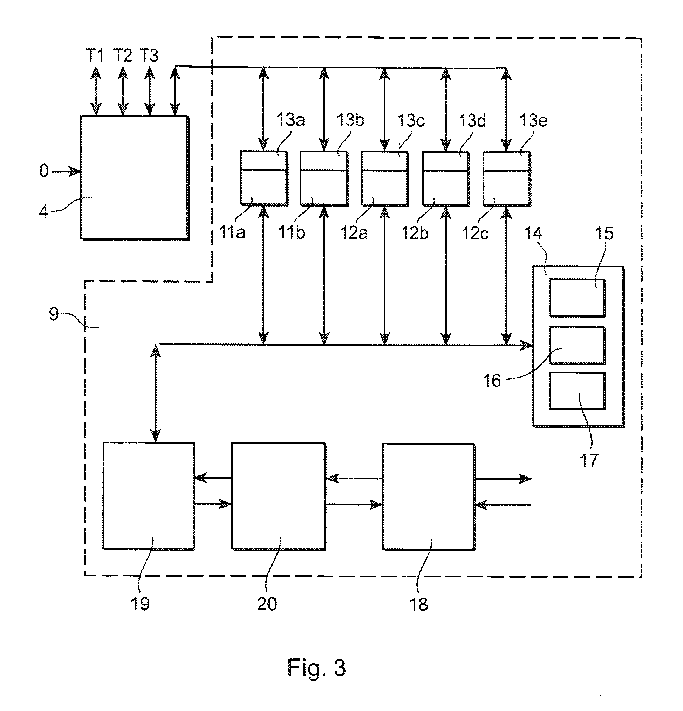

Figure 3 shows a functional block diagram of a system according to an embodiment of the invention. The external logic unit 4 receives product orders 0, for example from a business system. The product orders includes information on which type of aggregation is to produced or dismounted by the system. The external logic unit 4 also receives status signals from the transportation stations and sends control signals to the transportation stations T1, T2, T3. In another embodiment, the product orders can be received directly by the robot controller.

The robot controller comprises for each aggregation station a queue module 11 a-b adapted for accommodating a sequence of operations defining a desired flow of products to or from the aggregation station. In this example, the system comprises a queue module 11 a for the aggregation station 5a and a queue module 11 b for the aggregation station 5b. The queue module includes data storage for storing the sequence of operations, an interface 13a-b for communicating with the external logic unit, and software for handling the queue of operations for the aggregation station and the communication with the external control unit 4.

The robot controller further comprises for each transportation station a queue module for accommodating movement operations for the robot in connection with the transport station. Each movement operation defines a pick or place movements for the robot in order to pick or place a product of a certain format from or on the transportation station. In this example, the system comprises a queue 12a for the transportation station 1a, a queue 12b for the transportation station 1 b, and a queue 12c for the transportation station 1c. Each transportation station queue module 12a-c is provided with data storage for storing the sequence of operations, an interface 13c-e for communicating with the external logic unit 4, and software for handling the queue of operations for the transport station and the communication with the external control unit 4. Accordingly, each aggregation station and each transportation station is provided with its own queue module.

In the following an example of the content of a sequence of operations is listed.

Each sequence of operations includes:
- A sequence number identifying the sequence of operations.
- A list of layers in the aggregation.

Each layer in the layer list includes:
- Layer number.
- Layer offset, which is the vertical position of the layer.
- A list of operations.

Each list of operations includes:
- An operation number identifying the operation.
- The type of operation, i.e. if it is a pick or a place operation,
- A format ID, identifying the format of the product to be operated on.
- A list of operation targets.

Each operation target in the target list may contain:
- A target number.
- A target position.
- A tool to be used, including calibration and load.
- Used work object coordinate system.
- Dwell time at pick or place operation.
- Total product load including location relative robot wrist when approaching the target.
- Total product load including location relative robot wrist when departing from target. This information is useful for the robot to be able to optimize its accelerations and decelerations.
- A list of target actions.

Each target action in the target action list contains:
- Action position, such as target position and action offset for approaching or departing.
- Action type (approach/target/depart).
- Move type (liner/jointwise/search).
- Acceleration data.
- Speed data.
- Corner path zones.
- List of action events, such as controlling activation of zones in gripper tool in a correct sequence and in a correct position on the robot movement path.

Each event in the action event list contains:
- Event type.
- Time before a certain point.
- Distance before an action target.
- Value of the set event. This is, for example values, of I/O signals.

Each target action in the target action list specifies how the movement is to be carried out and form input parameters to the robot program.

In the following an example of the content of a movement operation is listed:
- An operation number identifying the movement operation.
- The type of operation, i.e. if it is a pick or a place operation,
- A format ID, identifying the format of the product to be operated on.
- A list of operation targets. The list of operation target may have the same content as exemplified above for the sequence of operations.

The robot controller further comprises a data storage 14 including a first part 15 adapted to store one or more predefined sequences of operations for the aggregation stations, and a second part 16 adapted to store a plurality of predefined movement operations for the transportation stations. If a transportation station can provide products of more than one format, a predefined movement operation is stored for each product format. The data storage 14 further comprises a third part 17 adapted to store information on which product format or formats each transport station can supply or consume.

The robot controller 9 further comprises means 18 for storing and executing a robot program for controlling the movements of the robot when carrying out the transportation of the products between the transportation stations and the aggregation stations, and for controlling a robot tool holding the products during the transportation between the stations. The robot program generates instructions to a control system of the robot including a robot path interpolator and servo control of motors of the robot.

Further, the robot controller 9 comprises means 19, in the following denoted a flow manager, for storing and executing software that handles the logics of the control of the product flow. The flow manager receives and handles orders of desired flows of products to and from the aggregation stations. The flow manager sends orders to the transport stations so that they deliver and consume products of a correct format, and sends orders and instructions to the robot program about how and when the products is to be moved. The flow manager and the robot program are cooperating for carrying out the automatic flow of products. Each queue module 13a-e is communicating with the flow manager and the data storage 14. All communication between the flow manger 19 and the external logic unit 4 is carried out via the queue modules 13a-e.

The robot controller 9 comprises means 20, in the following denoted a flow schedule, for storing and executing software that handles priorities, when a plurality of different flows of products are running in parallel. The flow schedule decides 20 which one of the flows to be handled next, when more than one flow are running in parallel. This can either be done based on priorities, which means that different flows have different priorities, or by means of an optimization, for example, with regard to the time required to mount or dismount the aggregation, or the time to prepare the product on the transportation stations.

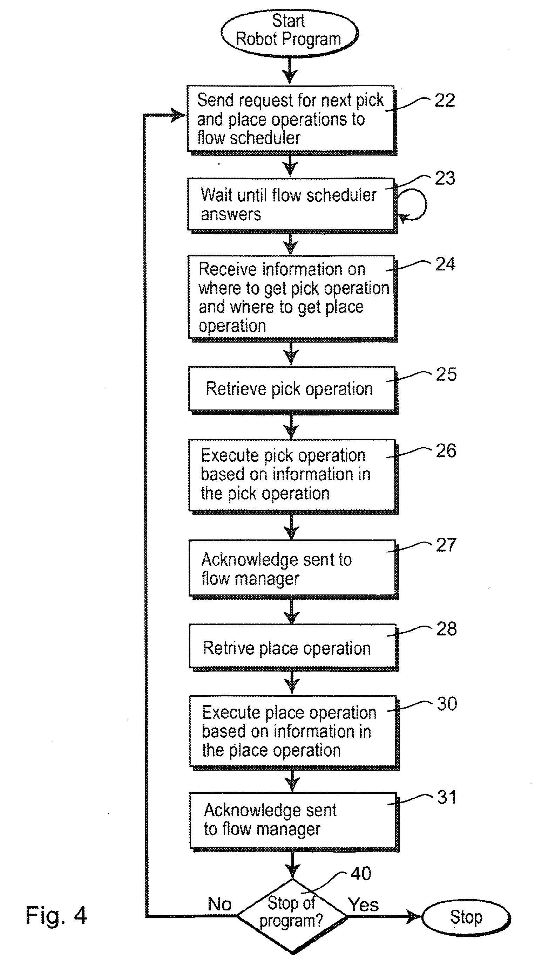

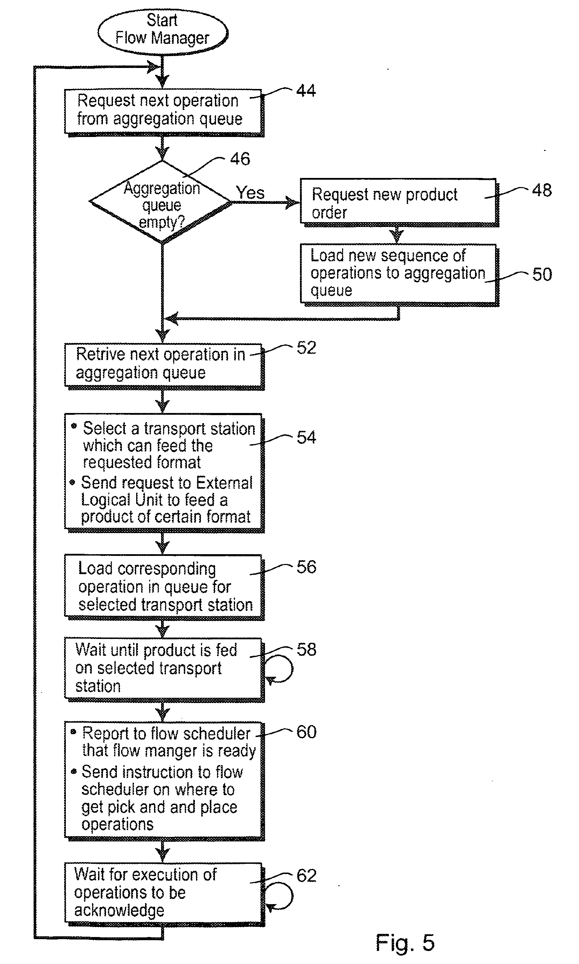

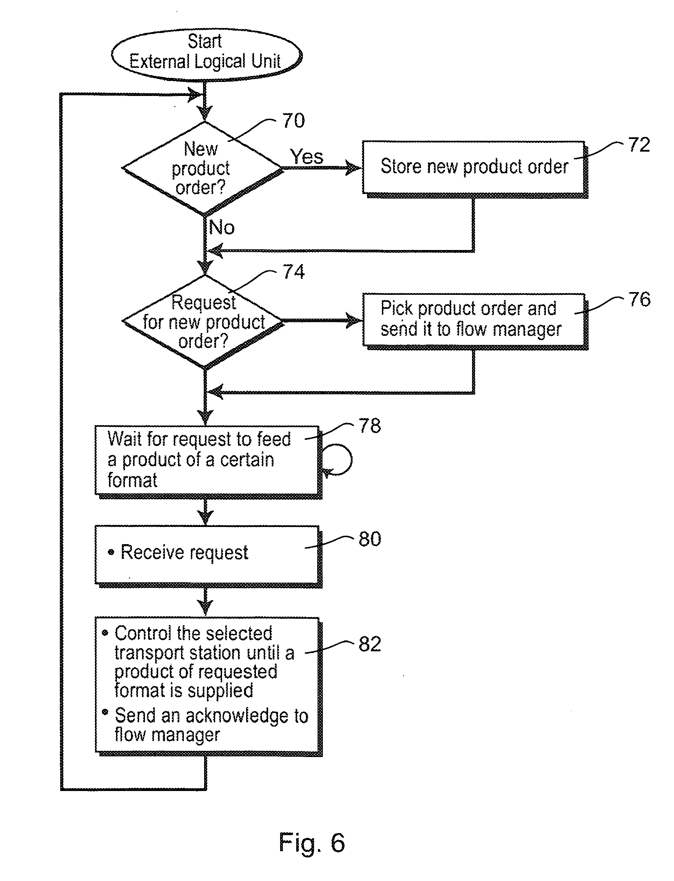

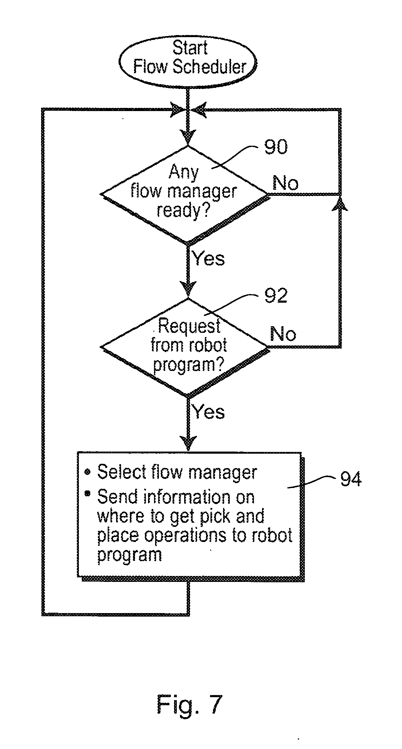

Figures 4-7 show flow diagrams illustrating a method and computer product for controlling automatic flows of products according to an embodiment of the present invention. It will be understood that each block of the flow charts can be implemented by computer program instructions. Figure 4 is a flow diagram showing an example of a robot program for controlling the movement of the robot during the flow of products. Figure 5 is a flow diagram showing an example a flow manager program for handling the logics of the control of the product flow. Figure 6 is a flow diagram showing an example of a control program for controlling the transportations stations, which, for example, is run on the external logic unit. Figure 7 is a flow diagram showing an example a flow scheduler program for handling a plurality of parallel product flows between a plurality of transport stations and a plurality of aggregation stations. Each flow has its own flow manager program running in parallel. In order to automatically control the flow of products between the stations, the robot program, the flow manager program, the flow scheduler program, and the control program for the transportation stations must cooperate with each other.

Figure 4 shows a flow diagram of a robot program for controlling the robot movements. The main task of the robot program is to execute pick and place operations instructed by the flow scheduler. The flow manager loads a sequence of operations to the queue of the aggregation station, selects a transport station that can deliver a product of the format specified in the next operation in the aggregation station queue, and loads a movement operation, corresponding to the requested format and the operation in the aggregation queue, to the queue of the selected transport station. If the next operation in the queues of the aggregation station is a pick operation, a corresponding place operations has to be loaded to the queue of the selected transport station and vice versa. When the corresponding pick and place operations have been loaded to the queues, and the selected transportation station has fed the requested product to a position within the working range of the robot, the flow manager is ready and the robot can move the product according to the instructions in the operations in the queues.

When the robot has finished the previous movement, it sends a request to the flow scheduler and requests information on where to get next pick operation and next place operation to be executed, block 22. The robot program has to wait until the flow scheduler answers to the request, block 23. The robot program receives information on where to get the pick and place operations to be carried out from the flow scheduler, i.e. in which aggregation station queue and in which transport station queue the operations are stored, block 24. One of the operations is always retrieved from the queue of the aggregation station, and the other operation is to be retrieved from one of the queues of the transportation stations.

The robot program retrieves the pick operation from the queue indicated by the flow scheduler, block 25 and executes the pick operation based on the information included in the retrieved operation, such as information on target positions, moved type, acceleration data, speed data, corner path zones, and action events, block 26. When the pick operation has been executed, the operation is acknowledged to the flow manager, block 27, and the corresponding place operation is retrieved from the queue pointed out by the flow manager, block 28. The retrieved place operation is executed based on information in the place operation, block 30. When the place operation has been executed, the operation is acknowledged to the flow manager, block 32. If stop of program is ordered, block 40, the robot program is stopped, otherwise the robot program sends a request for new pick and place operations to the flow scheduler.

Figure 5 shows an example of a flow diagram describing the flow manager program. When more than one flow are executed at the same time, each flow is provided with its own flow manager program which are executed in parallel. The next operation from the queue of the aggregation station is requested, block 44. If the queue of the aggregation station is empty, block 46, a new product order has to be requested, for example from the external logic unit, block 48. The external logic unit provides the flow manager with an ID identifying a certain product order. This identity is used by the flow manager to select a corresponding sequence of operations including instructions for executing the product order. The sequence of operations is, for example, retrieved from the first part 15 of the data storage 14 in which a plurality of predefined sequences of operations for the aggregation station is stored.

When a new sequence of operations has been retrieved, the new sequence is loaded to the queue of the aggregation station, block 50. Thereafter the next operation in the queue of the aggregation station is retrieved, block 52. The operation retrieved includes information as to whether it is a pick or place operation and the format of the product to be moved, including information on the type of product, the number of aggregated products to be moved, and the desired position and orientation of product or aggregated products to be moved. The flow manager decides which one of the transport stations to be used based on the information on which product format or formats each of the transport stations can supply or consume, which is stored in the third part 17 of the data storage 14, block 54. Thus, the flow manger selects one of the transport stations which is able to provide the requested format.

A request is sent to the external logic unit to feed or consume a product of the format specified in the operation. The request includes information on which one of the transportation stations has been selected, block 54. The flow manager loads a corresponding operation in the queue for the selected transport station, block 56. If a pick operation has been loaded to the queue of the aggregation station, a corresponding operation has to be a place operation, which is loaded to the queue of the transport station. Accordingly, the flow manager matches a pick operation with a corresponding place operation, and vice versa.

The flow manager has to wait until the product is fed on the selected transport station, block 58. When the flow manager has received acknowledge from the external logic unit that the product has been fed, the flow manager reports to the flow scheduler that it is ready, and also sends instructions to the flow scheduler on where to get the pick and place operations, block 60. Thereafter, the flow manager has to wait until the robot program has acknowledged that the execution of the pick and place operation has been carried out, block 62. Thereafter the sequence is repeated from the beginning. If the product instead is to be consumed by the transportation stations, the request to consume the product is sent to the external logic unit when the robot program has acknowledged that the execution of the pick and place operation has been carried out.

Figure 6 shows a flow diagram describing an example of a control program executed by the external logic unit for controlling the transport stations. The external logic unit waits for new product orders from, for example, an external business system, block 70. When a new product order is received it is stored in a product order queue, block 72. The external logic unit also waits for requests for a new product order from the flow manager, block 74. When a request for a new product order is received from the flow manager, a product order is picked from the queue of product orders and is sent to the flow manager, block 76. The external logic unit also waits for a request from the flow manager to feed or consume a product of a certain format on a selected transport station, block 78. Information on which transport station is selected is transferred from the flow manager to the external logic unit. When the request is received, block 80, the selected transport station is controlled in accordance with the request, block 82. If a product feed is requested, the transport station is controlled until a product of the requested format is supplied to a position within the working range of the robot so that the robot is able to pick it. When the product of the requested format has been supplied, an acknowledgement is sent to the flow manager, block 82. The same sequence applies when the transport station instead of feeding a requested format is requested to consume a requested format. The selected transport station is controlled until the product has been consumed.

Figure 7 shows a flow diagram describing an example of a flow scheduler program. When more than one flow are executed in parallel, the flow schedule decides which flow to be executed next, i.e. from which aggregation queue and transportation queue the next pick and place operations are to be retrieved by the robot program. The flow scheduler waits for the flow managers to report if they are ready and have loaded the next pick and place operations to the queues of the aggregation station and the selected transport station, block 90. The flow scheduler also waits for a request from the robot program to receive next pick and place operations, block 92. If more than one flow manger is ready when the request from the robot program is received, the flow scheduler selects one of the flow mangers and sends information from the selected flow manger on where to get the next pick and place operations for the flow to the robot program, block 94. The selection of flow manger is, for example, made based on predefined priorities for the flows.

The present invention is not limited to the embodiments disclosed but may be varied and modified within the scope of the following claims. If only one flow is to be handled at a time, it is not necessary to have a flow scheduler. In that case, the robot program sends the request for next pick and place operation to the flow manager instead of to the flow scheduler.

For example, some functionality provided by the external logic unit in the above example can as well be carried out by the flow manager, and some of the functionality carried out by the flow manager can as well be carried out by the external logic unit.

For example, the external logic unit can carry out the selection of one of the transport stations based on a requested format, and the external logic unit can load the corresponding operation in the queue for the selected transport station. The program storage for storing the sequences of operations, and the queues for the aggregation stations and the transport stations can be provided in the external logic unit or on another external computer connected to the robot controller, instead of in the robot controller as shown in the above example. It is also possible to run the flow manager program on the external logic unit controlling the transport stations, or on another external computer connected to the robot controller. It is not necessary to have a common external logic unit controlling the transport stations. The flow manager may directly control the transport stations

It is also possible to automatically calculate beforehand the desired positions and orientations of the products on the aggregation station based on an optimization algorithm and geometrical properties of the products and the aggregation of products, and to automatically generate the sequence of operations based on the calculated positions and orientations.

## Claims

1. A method for controlling an automatic flow of products, wherein a programmable mechanical device (8) moves the products between a plurality of transport stations (1a-c) which supply or consume the products, and at least one aggregation station (5a-b) on which an aggregation of products (6b) is built up or dismounted according to a pattern, **characterized in that** the method comprises:
- receiving at least one sequence of operations defining at least a part of a desired flow of products to or from the aggregation station in order to build up or dismount said aggregation of products according to the pattern,
- loading the received sequence of operations to a queue (11a-b) for the aggregation station, and
- repeating the following steps until all operations in the queue have been executed:
○ retrieve next operation from the queue of the aggregation station,
○ select one of the transport stations and control it based on the retrieved operation, and
○ instruct the mechanical unit to perform movements for transporting a product between the selected transport station and the aggregation station based on the retrieved operation.

2. The method according to claim 1, wherein said sequence of operations comprises information on a desired format of the product, and one of the transport stations is selected and controlled based on the desired format of the product and information on which product format or formats each transport station can supply or consume.

3. The method according to claim 2, wherein said format defines type of product, number of products to be handled at the same time, and the configuration relative each other of the products to be handled at the same time.

4. The method according to claim 2 or 3, wherein the method comprises generating a request to the selected transport stations to feed a product of the desired format based on the retrieved operation.

5. The method according to any of the previous claims, wherein said sequence of operations includes information on parameter values for the movements of the mechanical unit, and the movements of the mechanical unit is instructed based on said parameter values.

6. The method according to claim 5, wherein said parameter values comprises a list of targets defining a movement path for the mechanical unit, the list including positions of the targets.

7. The method according to claim 6, wherein said parameter values comprises speed data and acceleration data for the targets and actions to be carried out along the movements path.

8. The method according to any of the previous claims, wherein said sequence of operations includes information on the types of movements to be carried out by the mechanical unit, wherein one type of movement is a pick operation and another type of movement is a place operation.

9. The method according to any of the previous claims, wherein the method further comprises:
- storing at least one predefined movement operation for each transport station defining a pick or place movement for the mechanical unit in relation to the transport station,
- retrieving a predefined movement operation for the selected transport station, and
- instructing the mechanical unit to perform said movements for transporting the product between the selected transport station and the aggregation station based on the retrieved movement operation for the selected transport station.

10. The method according to claim 2 and 9, wherein a plurality of predefined movement operations defining pick or place movements for different product formats is stored for at least one of the transport stations, and a predefined movement operation for the selected transport station is retrieved based on said information on a desired format of the product.

11. The method according to any of the previous claims, wherein the method comprises:
- storing a plurality of sequences of operations defining different flows of products to or from the aggregation station,
- selecting one of the stored sequences of operation, and
- loading the selected sequence of operations to said queue for the aggregation station.

12. The method according to any of the previous claims, wherein the programmable mechanical device moves the products between a plurality of transport stations and a plurality of aggregation stations, and the method comprises:
- receiving for each aggregation station at least one sequence of operations defining a desired flow of products to or from the aggregation station,
- loading for each aggregation station the received sequence of operations to a queue for the aggregation station, and
- repeating for each queue the following steps until all operations in the queue has been executed: retrieve next operation from the queue of the aggregation station, select one of the transport stations and control it based on the retrieved operation, and instruct the mechanical unit to perform movements for transporting a product between the selected transport station and the aggregation station based on the retrieved operation.

13. The method according to claim 10, wherein the execution order of the queues of the aggregation stations is determined based on defined priories for the aggregation stations.

14. A computer program product directly loadable into the internal memory of one or more computers, comprising software for performing the steps of any of the claims 1-13, when said software is run on the computer.

15. A computer-readable medium, having a program recorded thereon, where the program is to make one or more computers perform the steps of any of the claims 1-13 when said program is run on the computer.

16. A system for controlling an automatic flow of products, wherein the system comprises:
- a plurality of transport stations (1a-c) which supply or consume the products,
- at least one aggregation station (5a-b) on which an aggregation (6a-b) of products is built up or dismounted according to a pattern, and
- a programmable mechanical device (8) adapted to move the products between the transport stations and the aggregation station, **characterized in that** the system further comprises:
- at least one computing device (9) having therein program code usable by said computing device, said program code comprising code configured to:
○ receive at least one sequence of operations defining at least a part of a desired flow of products to or from the aggregation station in order to build up or dismount said aggregation of products according to the pattern,
○ load the received sequence of operations to a queue of the aggregation station, and
○ repeat the following steps until all operations in the queue have been executed: retrieve the next operation from the queue of the aggregation station, select one of the transport stations and control it based on the retrieved operation, and instruct the mechanical unit to perform movements for transporting a product between the selected transport station and the aggregation station based on the retrieved operation.

17. The system according to claim 16, wherein said sequence of operations comprises information on a desired format of the product, and one of the transport stations is selected and controlled based on the desired format of the product and information on which product format or formats each transport station can supply or consume.

18. The system according to claim 17, wherein said format defines type of product, number of products to be handled at the same time, and the configuration relative to each other of the products to be handled at the same time

19. The system according to any of the claims 15-18, wherein said sequence of operations includes information on parameter values for the movements of the mechanical unit, and the movements of the mechanical unit is instructed based on said parameter values.

20. The system according to claim 19, wherein said mechanical unit (8) is an industrial robot and said parameter values include targets on a movement path for the robot and events to be carried out along the movement path.

21. The system according to any of the claims 15-20, wherein said mechanical unit (8) is an industrial robot and said computing device is a robot controller.

22. The system according to any of the claims 15-21, wherein said sequence of operations includes information on the types of movements to be carried out by the mechanical unit, wherein one type of movement is a pick operation and another type of movement is a place operation.

23. The system according to any of the claims 15-22, wherein the system comprises a plurality of aggregation stations (5a-b), and the programmable mechanical device is adapted to move the products between the transport stations and the aggregation stations, and a queue (11a-b) for each aggregation station, and said program code comprises code configured to receive for each aggregation station at least one sequence of operations defining a desired flow of products to or from the aggregation station, to load for each aggregation station the received sequence of operations to the queue of the aggregation station, and to repeat for each queue the following steps until all operations in the queue have been executed: retrieve next operation from the queue of the aggregation station, select one of the transport stations and control it based on the retrieved operation, and instruct the mechanical unit to perform movements for transporting a product between the selected transport station and the aggregation station based on the retrieved operation, and the system comprises a scheduler (20) adapted to determine the execution order of the queues of the aggregation stations.

24. The system according to claim 23, wherein said scheduler (20) is adapted to determine the execution order of the queues based on defined priories for the aggregation stations.

25. The system according to any of the claims 15-24, wherein the system further comprises storage means (12a-c) for storing at least one predefined movement operation for each transport station defining a pick or place movement for the mechanical unit in relation to the transport station, and said program code comprises code configured to:
- retrieve a predefined movement operation for the selected transport station, and
- instruct the mechanical unit to perform said movements for transporting the product between the selected transport station and the aggregation station based on the retrieved movement operation for the selected transport station.

26. The system according to claim 25, wherein said storage means (12a-c) is adapted to store a plurality of predefined movement operations, defining pick or place movements for different product formats, for at least one of the transport stations, and said program code comprises code configured to retrieve a predefined movement operation for the selected transport station based on said information on a desired format of the product.

## Patentansprüche

1. Ein Verfahren zum Kontrollieren eines automatischen Flusses von Produkten, wobei eine programmierbare mechanische Vorrichtung (8) die Produkte zwischen einer Vielzahl von Transportstationen (1a-c) bewegt, welche die Produkte liefern oder konsumieren, und zumindest einer Aggregationsstation (5a-b), auf der eine Aggregation von Produkten (6b) gemäß einem Muster aufgebaut oder abgebaut wird, **dadurch gekennzeichnet, dass** das Verfahren umfasst:
- Empfangen zumindest einer Sequenz von Operationen, die zumindest einen Teil eines gewünschten Flusses von Produkten zu oder von der Aggregationsstation definieren, um die Aggregation von Produkten gemäß dem Muster aufzubauen oder abzubauen,
- Laden der empfangenen Sequenz von Operationen in einen Ablauf (11a-b) für die Aggregationsstation, und
- Wiederholen der folgenden Schritte, bis alle Operationen in dem Ablauf durchgeführt worden sind:
■ Abfragen der nächsten Operation von dem Ablauf der Aggregationsstation,
■ Auswählen einer der Transportstationen und Kontrollieren derselben basierend auf der abgefragten Operation, und
■ Anweisen der mechanischen Einheit, dass sie Bewegungen zum Transportieren eines Produktes zwischen der gewählten Transportstation und der Aggregationsstation ausführt, basierend auf der abgefragten Operation.

2. Das Verfahren nach Anspruch 1, wobei die Sequenz von Operationen Information über ein gewünschtes Format des Produktes umfasst, und wobei eine der Transportstationen ausgewählt und kontrolliert wird basierend auf dem gewünschten Format des Produktes und Information darüber, welches Produktformat oder welche Produktformate jede Transportstation liefern oder konsumieren kann.

3. Das Verfahren nach Anspruch 2, wobei das Format Typ des Produkts, Anzahl von gleichzeitig abzuhandelnden Produkten und die Konfguration der gleichzeitig abzuhandelnden Produkte relativ zueinander definiert.

4. Das Verfahren nach einem der Ansprüche 2 oder 3, wobei das Verfahren umfasst Erzeugen einer Anfrage an die ausgewählte Transportstation, um ein Produkt des gewünschten Formats basierend auf der abgefragten Operation einzuspeisen.

5. Das Verfahren nach einem der vorangehenden Ansprüche, wobei die Sequenz von Operationen Information über Parameterwerte für die Bewegungen der mechanischen Einheit umfasst, und wobei die Bewegungen der mechanischen Einheit basierend auf den Parameterwerten angewiesen werden.

6. Das Verfahren nach Anspruch 5, wobei die Parameterwerte eine Liste von Zielen umfassen, die einen Bewegungspfad für die mechanische Einheit definierten, wobei die Liste Positionen der Ziele umfasst.

7. Das Verfahren nach Anspruch 6, wobei die Parameterwerte Geschwindigkeitsdaten und Beschleunigungsdaten für die Ziele und entlang des Bewegungspfades durchzuführende Maßnahmen umfassen.

8. Das Verfahren nach einem der vorangehenden Ansprüche, wobei die Sequenz von Operationen Information über die Bewegungsarten umfasst, die von der mechanischen Einheit ausgeführt werden sollen, wobei eine Bewegungsart eine Greifoperation und eine andere Bewegungsart eine Platzieroperation ist.

9. Das Verfahren nach einem der vorangehenden Ansprüche, wobei das Verfahren weiterhin umfasst:
- Speichern zumindest einer vordefinierten Bewegungsoperation für jede Transportstation, die eine Greif- oder Platzieroperation für die mechanische Einheit definiert in Bezug auf die Transportstation,
- Abfragen einer vordefinierten Bewegungsoperation für die ausgewählte Transportstation, und
- Anweisen der mechanischen Einheit, dass sie die Bewegungen zum Transportieren des Produktes zwischen der ausgewählten Transportstation und der Aggregationsstation ausführt, basierend auf der abgefragten Bewegungsoperation für die gewählte Transportstation.

10. Verfahren nach Anspruch 2 und 9, wobei eine Vielzahl von vordefinierten Bewegungsoperationen, die eine Greif- oder Platzieroperation für verschiedene Produktformate definieren, für zumindest eine der Transportstationen gespeichert ist und eine vordefinierte Bewegungsoperation für die ausgewählte Transportstation abgefragt wird, basierend auf der Information über ein gewünschtes Format des Produktes.

11. Das Verfahren nach einem der vorangehenden Ansprüche, wobei das Verfahren umfasst:
- Speichern einer Vielzahl von Sequenzen von Operationen, die verschiedene Flüsse von Produkten zu oder von der Aggregationsstation definieren,
- Wählen einer der gespeicherten Sequenzen von Operationen, und
- Laden der gewählten Sequenz von Operationen in den Ablauf für die Aggregationsstation.

12. Das Verfahren nach einem der vorangehenden Ansprüche, wobei die programmierbare mechanische Vorrichtung die Produkte zwischen einer Vielzahl von Transportstationen und einer Vielzahl von Aggregationsstationen bewegt, und das Verfahren umfasst:
- für jede Aggregationsstation Empfangen zumindest einer Sequenz von Operationen, die einen gewünschten Fluss von Produkten zu oder von der Aggregationsstation definierten,
- für jede Aggregationsstation Laden der empfangenen Sequenz von Operationen in einen Ablauf für die Aggregationsstation, und
- für jeden Ablauf Wiederholen der folgenden Schritte, bis alle Operationen in dem Ablauf durchgeführt worden sind: Abfragen der nächsten Operation von dem Ablauf der Aggregationsstation, Auswählen einer der Transportstationen und Kontrollieren derselben basierend auf der abgefragten Operation, und Anweisen der mechanischen Einheit, dass sie Bewegungen zum Transportieren eines Produktes zwischen der gewählten Transportstation und der Aggregationsstation ausführt, basierend auf der abgefragten Operation.

13. Das Verfahren nach Anspruch 10, wobei die Ausfuhrungsordnung der Abläufe der Aggregationsstationen basierend auf definierten Prioritäten der Aggregationsstationen bestimmt wird.

14. Ein Computerprogrammprodukt, das direkt in den internen Speicher eines oder mehrerer Computer geladen werden kann, umfassend Software zum Ausführen der Schritte nach einem der Ansprüche 1-13, wenn die Software auf dem Computer läuft.

15. Ein computerlesbares Medium, das ein Programm aufweist, das darauf ausgenommen ist, wobei das Programm einen oder mehrere Computer veranlasst, die Schritte nach einem der Ansprüche 1-13 auszuführen, wenn das Programm auf einem Computer läuft.

16. Ein System zum Kontrollieren eines automatischen Flusses von Produkten, wobei das System umfasst:
- eine Vielzahl von Transportstationen (1a-c), welche die Produkte liefern oder konsumieren,
- zumindest eine Aggregationsstation (5a-b), auf der eine Aggregation (6a-b) von Produkten gemäß einem Muster aufgebaut oder abgebaut wird, und
- eine programmierbare mechanische Vorrichtung (8), die eingerichtet ist, die Produkte zwischen den Transportstationen (1a-c) und der Aggregationsstation zu bewegen, **dadurch gekennzeichnet, dass** das System weiterhin umfasst:
- zumindest eine Rechnervorrichtung (9), die darin Programmcode aufweist, der von der Rechnervorrichtung genutzt werden kann, wobei der Programmcode Code umfasst, der eingerichtet ist, um
■ zumindest eine Sequenz von Operationen zu empfangen, die zumindest einen Teil eines gewünschten Flusses von Produkten zu oder von der Aggregationsstation definieren, um die Aggregation von Produkten gemäß dem Muster aufzubauen oder abzubauen,
■ die empfangene Sequenz von Operationen in einen Ablauf der Aggregationsstation zu laden, und
■ die folgenden Schritte zu wiederholen, bis alle Operationen in dem Ablauf durchgeführt worden sind: Abfragen der nächsten Operation von dem Ablauf der Aggregationsstation, Auswählen einer der Transportstationen und Kontrollieren derselben basierend auf der abgefragten Operation, und Anweisen der mechanischen Einheit, dass sie Bewegungen zum Transportieren eines Produktes zwischen der gewählten Transportstation und der Aggregationsstation ausführt, basierend auf der abgefragten Operation.

17. Das System nach Anspruch 16, wobei die Sequenz von Operationen Information über ein gewünschtes Format des Produktes umfasst, und wobei eine der Transportstationen ausgewählt und kontrolliert wird basierend auf dem gewünschten Format des Produktes und Information darüber, welches Produktformat oder welche Produktformate jede Transportstation liefern oder konsumieren kann.

18. Das System nach Anspruch 17, wobei das Format Typ des Produkts, Anzahl von gleichzeitig abzuhandelnden Produkten und die Konfiguration der gleichzeitig abzuhandelnden Produkte relativ zueinander definiert.

19. Das System nach einem der Ansprüche 15-18, wobei die Sequenz von Operationen Information über Parameterwerte für die Bewegungen der mechanischen Einheit umfasst, und wobei die Bewegungen der mechanischen Einheit basierend auf den Parameterwerten angewiesen werden.

20. Das System nach Anspruch 19, wobei die mechanische Einheit (8) ein industrieller Roboter ist und die Parameterwerte Ziele auf einem Bewegungspfad für den Roboter und entlang des Bewegungspfades auszuführende Ereignisse umfassen.

21. Das System nach einem der Ansprüche 15-20, wobei die mechanische Einheit (8) ein industrieller Roboter ist und die Rechnervorrichtung ein Robotercontroller ist.

22. Das System nach einem der Ansprüche 15-21, wobei die Sequenz von Operationen Information über die Bewegungsarten umfasst, die von der mechanischen Einheit ausgeführt werden sollen, wobei eine Bewegungsart eine Greifoperation und eine andere Bewegungsart eine Platzieroperation ist.

23. Das System nach einem der Ansprüche 15-22, wobei das System eine Vielzahl von Aggregationsstationen (5a-b) umfasst, und die programmierbare mechanische Vorrichtung eingerichtet ist, die Produkte zwischen den Transportstationen und den Aggregationsstationen zu bewegen, und einen Ablauf (11a-b) für jede Aggregationsstation umfasst, und der Programmcode Code umfasst, der eingerichtet ist, für jede Aggregationsstation zumindest eine Sequenz von Operationen zu empfangen, die einen gewünschten Fluss von Produkten zu oder von der Aggregationsstation definieren, um für jede Aggregationsstation die empfangene Sequenz von Operationen in den Ablauf der Aggregationsstation zu laden, und für jeden Ablauf die folgenden Schritte zu wiederholen, bis alle Operationen in dem Ablauf ausgeführt worden sind: Abfragen der nächsten Operation von dem Ablauf der Aggregationsstation, Auswählen einer der Transportstationen und Kontrollieren derselben basierend auf der abgefragten Operation, und Anweisen der mechanischen Einheit, dass sie Bewegungen zum Transportieren eines Produktes zwischen der gewählten Transportstation und der Aggregationsstation ausführt, basierend auf der abgefragten Operation, und wobei das System ein Steuerprogramm (20) umfasst, das eingerichtet ist, die Ausführungsordnung der Abläufe der Aggregationsstationen zu bestimmen.

24. Das System nach Anspruch 23, wobei das Steuerprogramm (20) eingerichtet ist, die Ausführungsordnung der Abläufe basierend auf definierten Prioritäten für die Aggregationsstationen zu bestimmen.

25. Das System nach einem der Ansprüche 15-24, wobei das System weiterhin ein Speichermittel (12a-c) umfasst zum Speichern zumindest einer vordefinierten Bewegungsoperation für jede Transportstation, die eine Greif- oder Platzierbewegung für die mechanische Einheit definiert in Bezug auf die Transportstation, und wobei der Programmcode Code umfasst, der eingerichtet ist, um:
- Abfragen einer vordefinierten Bewegungsoperation für die gewählte Transportstation, und
- Anweisen der mechanischen Einheit, dass sie die Bewegungen zum Transportieren des Produktes zwischen der gewählten Transportstation und der Aggregationsstation basierend auf der abgefragten Bewegungsoperation für die gewählte Transportstation ausführt.

26. Das System nach Anspruch 25, wobei das Speichermittel (12a-c) eingerichtet ist, eine Vielzahl von vordefinierten Bewegungsoperationen zu speichern, die eine Greif- oder Platzierbewegung für verschiedene Produktformate definieren, für zumindest eine der Transportstationen, und wobei der Programmcode Code umfasst, der eingerichtet ist, eine vordefinierte Bewegungsoperation für die gewählte Transportstation basierend auf der Information über ein gewünschtes Format des Produkts abzufragen.

## Revendications

1. Procédé destiné à commander un flux automatique de produits, dans lequel un dispositif mécanique programmable (8) déplace les produits entre une pluralité de stations de transport (1a-c) qui fournissent ou consomment les produits et au moins une station d'agrégation (5a-b) sur laquelle une agrégation de produits (6b) est accumulée ou démontée selon un modèle, **caractérisé en ce que** le procédé comporte les étapes ci-dessous consistant à :
- recevoir au moins une séquence d'opérations définissant au moins une partie d'un flux de produits souhaité vers ou en provenance de la station d'agrégation afin d'accumuler ou de démonter ladite agrégation de produits selon le modèle ;
- charger la séquence d'opérations reçue vers une file d'attente (11a-b) de la station d'agrégation, et
- répéter les étapes ci-dessous jusqu'à ce que toutes les opérations dans la file d'attente aient été exécutées :
○ récupérer l'opération successive dans la file d'attente de la station d'agrégation ;
○ sélectionner l'une des stations de transport et la commander sur la base de l'opération récupérée ; et
○ amener l'unité mécanique à mettre en oeuvre des déplacements pour transporter un produit entre la station de transport sélectionnée et la station d'agrégation sur la base de l'opération récupérée.

2. Procédé selon la revendication 1, dans lequel ladite séquence d'opérations comporte des informations sur un format désiré du produit, et l'une des stations de transport est sélectionnée et commandée sur la base du format désiré du produit et des informations sur le ou les formats de produit que chaque station de transport peut fournir ou consommer.

3. Procédé selon la revendication 2, dans lequel ledit format définit le type de produit, le nombre de produits destinés à être manipulés au même instant, et la configuration relativement à chacun des autres produits à manipuler au même instant.

4. Procédé selon la revendication 2 ou 3, dans lequel le procédé comporte l'étape consistant à générer une demande aux stations de transport sélectionnées en vue de charger un produit du format désiré sur la base de l'opération récupérée.

5. Procédé selon l'une quelconque des revendications précédentes, dans lequel ladite séquence d'opérations comporte des informations sur des valeurs paramétriques des déplacements de l'unité mécanique, et les déplacements de l'unité mécanique sont indiqués sur la base desdites valeurs paramétriques.

6. Procédé selon la revendication 5, dans lequel lesdites valeurs paramétriques comportent une liste de cibles définissant un chemin de déplacement de l'unité mécanique, la liste incluant les positions des cibles.

7. Procédé selon la revendication 6, dans lequel lesdites valeurs paramétriques comportent des données de vitesse et des données d'accélération des cibles, ainsi que les actions à mettre en oeuvre sur le chemin de déplacement.

8. Procédé selon l'une quelconque des revendications précédentes, dans lequel ladite séquence d'opérations comporte des informations sur les types de déplacements destinés à être mis en oeuvre par l'unité mécanique, dans lequel un type de déplacement est une opération de collecte et un autre type de déplacement est une opération de positionnement.

9. Procédé selon l'une quelconque des revendications précédentes, dans lequel le procédé comporte en outre les étapes ci-dessous consistant à :
- stocker au moins une opération de déplacement prédéfinie pour chaque station de transport définissant un déplacement de collecte ou de positionnement de l'unité mécanique relativement à la station de transport ;
- récupérer une opération de déplacement prédéfmie de la station de transport sélectionnée ; et
- amener l'unité mécanique à mettre en oeuvre lesdits déplacements en vue de transporter le produit entre la station de transport sélectionnée et la station d'agrégation sur la base de l'opération de déplacement récupérée de la station de transport sélectionnée.

10. Procédé selon l'une quelconque des revendications 2 et 9, dans lequel une pluralité d'opérations de déplacement prédéfinies définissant des déplacements de collecte ou de positionnement pour différents formats de produits est stockée pour au moins l'une des stations de transport, et une opération de déplacement prédéfinie pour la station de transport sélectionnée est récupérée sur la base desdites informations connexes à un format désiré du produit.

11. Procédé selon l'une quelconque des revendications précédentes, dans lequel le procédé comporte les étapes ci-dessous consistant à :
- stocker une pluralité de séquences d'opérations définissant différents flux de produits vers ou en provenance de la station d'agrégation ;
- sélectionner l'une des séquences d'opérations stockées ; et
- charger la séquence d'opérations sélectionnée vers ladite file d'attente de la station d'agrégation.

12. Procédé selon l'une quelconque des revendications précédentes, dans lequel le dispositif mécanique programmable déplace les produits entre une pluralité de stations de transport et une pluralité de stations d'agrégation, et le procédé comporte les étapes ci-dessous consistant à :
- recevoir, pour chaque station d'agrégation, au moins une séquence d'opérations définissant un flux de produits désiré vers ou en provenance de la station d'agrégation ;
- charger, pour chaque station d'agrégation, la séquence d'opérations reçue vers une file d'attente de la station d'agrégation ; et
- répéter, pour chaque file d'attente, les étapes ci-dessous jusqu'à ce que toutes les opérations dans la file d'attente aient été exécutées : récupérer l'opération successive dans la file d'attente de la station d'agrégation, sélectionner l'une des stations de transport et la commander sur la base de l'opération récupérée, et amener l'unité mécanique à mettre en oeuvre des déplacements pour transporter un produit entre la station de transport sélectionnée et la station d'agrégation sur la base de l'opération récupérée.

13. Procédé selon la revendication 10, dans lequel l'ordre d'exécution des files d'attente des stations d'agrégation est déterminé sur la base de priorités définies pour les stations d'agrégation.

14. Produit programme informatique chargeable directement dans la mémoire interne d'un ou plusieurs ordinateurs, comportant un logiciel permettant la mise en oeuvre des étapes selon l'une quelconque des revendications 1 à 13, lorsque ledit logiciel est exécuté sur l'ordinateur.

15. Support informatique lisible par un ordinateur, présentant un programme enregistré dans celui-ci, où le programme amène un ou plusieurs ordinateurs à mettre en oeuvre les étapes selon l'une quelconque des revendications 1 à 13, lorsque ledit programme est exécuté sur l'ordinateur.

16. Système destiné à commander un flux automatique de produits, dans lequel le système comporte :
- une pluralité de stations de transport (1a-c) qui délivrent ou consomment les produits ;
- au moins une station d'agrégation (5a-b) sur laquelle une agrégation (6a-b) de produits est accumulée ou démontée selon un modèle ; et
- un dispositif mécanique programmable (8) apte à déplacer les produits entre les stations de transport et la station d'agrégation, **caractérisé en ce que** le système comprend en outre :
- au moins un dispositif informatique (9) présentant un code de programme utilisable par ledit dispositif informatique, le code de programme comprenant un code configuré de manière à :
○ recevoir au moins une séquence d'opérations définissant au moins une partie d'un flux de produits désiré vers ou en provenance de la station d'agrégation afin d'accumuler ou de démonter ladite agrégation de produits selon le module ;
○ charger la séquence d'opérations reçue vers une file d'attente de la station d'agrégation, et
○ répéter les étapes ci-dessous jusqu'à ce que toutes les opérations dans la file d'attente aient été exécutées : récupérer l'opération successive dans la file d'attente de la station d'agrégation, sélectionner l'une des stations de transport et la commander sur la base de l'opération récupérée, et amener l'unité mécanique à mettre en oeuvre des déplacements pour transporter un produit entre la station de transport sélectionnée et la station d'agrégation sur la base de l'opération récupérée.

17. Système selon la revendication 16, dans lequel ladite séquence d'opérations comporte des informations sur un format désiré du produit, et l'une des stations de transport est sélectionnée et commandée sur la base du format désiré du produit et des informations sur le ou les formats de produit que chaque station de transport peut fournir ou consommer.

18. Système selon la revendication 17, dans lequel ledit format définit le type de produit, le nombre de produits destinés à être manipulés au même instant, et la configuration relativement à chacun des autres produits à manipuler au même instant.

19. Système selon l'une quelconque des revendications 15 à 18, dans lequel ladite séquence d'opérations comporte des informations sur des valeurs paramétriques des déplacements de l'unité mécanique, et les déplacements de l'unité mécanique sont indiqués sur la base desdites valeurs paramétriques.

20. Système selon la revendication 19, dans lequel ladite unité mécanique (8) est un robot industriel et lesdites valeurs paramétriques incluent des cibles sur un chemin de déplacement du robot et des événements destinés à être mis en oeuvre le long du chemin de déplacement.

21. Système selon l'une quelconque des revendications 15 à 20, dans lequel ladite unité mécanique (8) est un robot industriel et ledit dispositif informatique est un contrôleur de robot.

22. Système selon l'une quelconque des revendications 15 à 21, dans lequel ladite séquence d'opérations comporte des informations sur les types de déplacements destinés à être mis en oeuvre par l'unité mécanique, dans lequel un type de déplacement est une opération de collecte et un autre type de déplacement est une opération de positionnement.

23. Système selon l'une quelconque des revendications 15 à 22, dans lequel le système comporte une pluralité de stations d'agrégation (5a-b), et le dispositif mécanique programmable est apte à déplacer les produits entre les stations de transport et les stations d'agrégation, et une file d'attente (11a-b) pour chaque station d'agrégation, et ledit code de programme comporte un code configuré de manière à recevoir, pour chaque station d'agrégation, au moins une séquence d'opérations définissant un flux de produits désiré vers ou en provenance de la station d'agrégation, à charger pour chaque station d'agrégation, la séquence d'opérations reçue vers la file d'attente de la station d'agrégation, et à répéter, pour chaque file d'attente, les étapes ci-dessous jusqu'à ce que toutes les opérations dans la file d'attente aient été exécutées : récupérer l'opération successive dans la file d'attente de la station d'agrégation, sélectionner l'une des stations de transport et la commander sur la base de l'opération récupérée, et amener l'unité mécanique à mettre en oeuvre des déplacements pour transporter un produit entre la station de transport sélectionnée et la station d'agrégation sur la base de l'opération récupérée, et le système comporte un planificateur (20) apte à déterminer l'ordre d'exécution des files d'attentes des stations d'agrégation.

24. Système selon la revendication 23, dans lequel ledit planificateur (20) est apte à déterminer l'ordre d'exécution des files d'attente sur la base de priorités définies pour les stations d'agrégation.

25. Système selon l'une quelconque des revendications 15 à 24, dans lequel le système comporte en outre un moyen de stockage (12a-c) destiné à stocker au moins une opération de déplacement prédéfinie pour chaque station de transport définissant un déplacement de collecte ou de positionnement de l'unité mécanique relativement à la station de transport ; et ledit code de programme comporte un code configuré de manière à :
- récupérer une opération de déplacement prédéfinie de la station de transport sélectionnée ; et
- amener l'unité mécanique à mettre en oeuvre lesdits déplacements en vue de transporter le produit entre la station de transport sélectionnée et la station d'agrégation sur la base de l'opération de déplacement récupérée de la station de transport sélectionnée.

26. Système selon la revendication 25, dans lequel ledit moyen de stockage (12a-c) est apte à stocker une pluralité d'opérations de déplacement prédéfinies, définir des déplacements de collecte ou positionnement pour différents formats de produits, pour au moins l'une des stations de transport, et ledit code de programme comprend un code configuré de manière à récupérer une opération de déplacement prédéfinie de la station de transport sélectionnée sur la base desdites informations connexes à un format désiré du produit.
